Europäisches Patentamt

European Patent Office

Office européen des brevets

(11) Publication number: **0 094 229**
**B1**

(12) **EUROPEAN PATENT SPECIFICATION**

(45) Date of publication of patent specification: **12.04.89**

(51) Int. Cl.⁴: **G 05 D 7/01**

(21) Application number: **83302588.5**

(22) Date of filing: **09.05.83**

(54) Fluid flow control valve.

(30) Priority: **08.05.82 GB 8213377**

(43) Date of publication of application:
**16.11.83 Bulletin 83/46**

(45) Publication of the grant of the patent:
**12.04.89 Bulletin 89/15**

(84) Designated Contracting States:
**BE DE FR IT NL**

(56) References cited:
**DE-A-2 917 851**
**DE-B-1 903 305**
**FR-A-2 470 406**
**GB-A-1 081 856**
**GB-A-1 542 834**
**US-A-4 121 601**

(73) Proprietor: **DEREVE (FLOW CONTROLS) LIMITED**
**Park Lane Handsworth**
**Birmingham B21 8LE (GB)**

(72) Inventor: **Springer, Gerald Alfred John**
**5, Sandhurst Road**
**Sutton Coldfield West Midlands (GB)**

(74) Representative: **Harrison, Gordon Donald**
**FORRESTER & BOEHMERT Widenmayerstrasse 4/I**
**D-8000 München 22 (DE)**

Courier Press, Leamington Spa, England.

## Description

The present invention relates to control valves for fluids.

The control valve of the present invention has primary but not exclusive application to the control of fluid flow systems in which previously there has been a constant flow of fluid, for example water, such as the supply of water to an automatic flushing system for a urinal.

The present invention also relates to a method of reducing the amount of water that would normally be used in an automatic flushing system.

British Patent Specifiction No. 1,542,834 discloses a valve for reducing the amount of water normally used in an automatic flushing system. Such valve has an inlet and an outlet, the inlet being connected to a water supply pipe which feeds other water using appliances, such as hand washing basins etc., the outlet of the valve comprising a water feed pipe to an automatic flushing system.

The inlet and outlet of the valve are connected for predetermined periods of time following a substantial fluctuation in the pressure at the inlet of the valve.

Such a substantial fluctuation of pressure may be cause by use of the other water using appliances. Unfortunately, fluctuations in pressure at the inlet of the valve, which fluctuations may be due to causes other than use of the other water using appliances, can cause unwanted operation of the valve. Furthermore, adjustment of the valve may be difficult since the reduction in pressure at the inlet caused by use of an adjacent water using appliance may be substantially the same as the fluctuations that occur in the mains water pressure due to fluctuation in demand.

British Patent Specification No. 1,081,856 discloses a valve having an inlet and two outlets, the purpose of the valve being to achieve a constant quantity of fluid flowing between the inlet and the first outlet irrespective of fluid pressure at the input, the valve is designed to operate so as to maintain a constant quantity of fluid flowing through a primary circuit.

U.S. Patent Specification No. 4,121,601 discloses a flow sensor valve adapted to operate in a motor vehicle to provide a limited slip differential facility, the valve being adapted to sense the flow of hydraulic liquid to a pair of hydraulic motors and if the flow rate between the two motors exceeds a certain differential, the valve operates to restrict the flow to the motor having the larger of the two flow rates.

It is one object of the present invention to provide a new or improved fluid flow control valve.

According to the present invention we provide a fluid flow control valve comprising an inlet in permanent communication with a first outlet, and a movable member provided in the flow path between the inlet and the first outlet and taking a first idle state wherein it provides a predetermined or zero flow of the fluid through a second outlet, said movable member being moved under influence of the fluid from said first state to a second state in which it permits of or increases flow between said inlet and the second outlet; the movable member being designed so as to maintain, without significant restriction, the flow path between the inlet and the first outlet, when it moves from said first state into said second state; characterised in that the valve is adapted to respond to an intermittent demand of said fluid at the first outlet, the said movable member comprises or co-operates with a fluid flow sensor in the flow path, said sensor, on demand of fluid at the first outlet acting solely under the influence of fluid flow through said permanent communication to move said movable member to said second state.

Preferably a permanently open limited fluid flow path is provided between the inlet and said second outlet.

Preferably said movable member may present a substantial surface area transverse to the direction of flow such that, on occurrence of flow, a force is applied to move said movable member.

Alternatively, the fluid flow sensor may comprise a rotatable member adapted to rotate about a rotatable axis in response to fluid flow between said inlet and said first outlet.

Conveniently said fluid flow sensor may be operatively connected with valve means provided in fluid flow connection means between said inlet and said second outlet, said valve means being adapted to open or open more fully in response to movement of said fluid flow sensor.

The valve of the present invention will not be operated by spurious fluctuations in pressure and is only operated on the occurrence of water flow.

It is another object of the invention to provide in or for an automatic flushing system situated in a water using area in which other water using appliances are situated, such as hand washing basins etc., a method of causing operation of the automatic flushing system at a variable rate, the rate increasing on increase in use of said other water using appliances.

To meet this object we provide according to a further aspect of the invention an automatic flushing system including a cistern and being situated in a water using area having other water using appliances, the automatic flushing system being arranged to operate on the accumulation of a predetermined amount of water in the cistern, said automatic flushing system comprising a fluid flow control valve having an inlet for controlling the supply of water to the cistern and the other water using appliances, characterised in that said valve has a first outlet in permanent communiction with the inlet and is connected to said other water using appliances, which are provided to intermittently demand water from said first outlet, said control valve has fluid flow sensor means comprising a movable member positioned in the flow path between the inlet and the first outlet, the movable member being moved from a first idle state to a second state under influence of fluid flow as sensed by said sensor means in response to water demand from said other water using appliances, said second state permitting of or increasing flow between said inlet and a second outlet connected to said cistern, the arrangement being such that when said water using appliances are used and water is flowing to said appliances, water flow to said cistern will be increased.

The cistern in the automatic flushing system will thus be filled only at a "fast" rate when the other water appliances are being used. The rate of fill of the cistern being dependent on the amount of water used in the other water using appliances, and will not be affected by spurious pressure changes in the water supply.

The invention will now be described in more detail with reference to the accompanying drawings wherein:—

FIGURE 1 is a sectional view of one embodiment of valve of the present invention;

FIGURE 2 is an exploded view of the rotor and supporting assembly of the valve shown in Figure 1;

FIGURE 3 is a sectional view of a second embodiment of valve of the present invention;

FIGURE 4 is a plan view of the lower end part of the valve shown in Figure 3;

FIGURE 5 is a part sectional perspective view of the fluid flow sensor; and

FIGURE 6 is a schematic view of the valve means of the present invention connected in a water supply system.

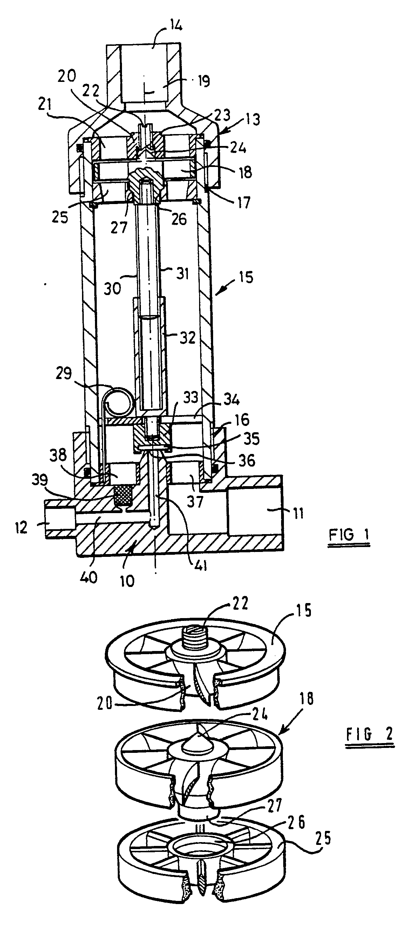

Referring first to Figure 1, the valve means of the present invention comprises an end part 10 having inlet 11 and second outlet 12. A second end part 13 is provided with first outlet 14. Between the first and second end parts 10 and 13 is a central cylindrical-like part 15 which is secured to each end part 10 and 13 making sealing engagement with each end part to respective cooperating thread formations 16 and 17.

Within the central part 15 there is provided a rotor 18 mounted for rotation about a rotational axis 19, the rotor 18 being mounted at one end in a bearing 20 which is supported relative to the central part 15 by a web 21. An adjustment screw 22 is provided having a concave end surface 23 in which the tip 24 of the rotor 18 locates.

A second web 25 is provided which web 25 afford an annular bearing surface 26 which comes into contact with a bearing surface 27 provided on the rotor 18 to provide additional location of the rotor. The webs 21 and 25 each have blades of a configuration to enhance the operation of the rotor 18 when water flows over the blades.

Secured to the rotor 18 is a spindle 30 having an external helical thread form 31 which is preferably a multi-start thread form of large pitch.

A tubular part 32 is provided with an internal thread form adapted to cooperate with the external thread form 31 on the spindle 30. A spring 29 secured to the central part 15 bears on a guide member 34 secured to the tubular part 32. The co-operation between the spring 29, one or more of which may be provided, and/or co-operation between the guide member 34 and locating surfaces provided on the central part 15 prevents rotation of the guide member 34 and hence tubular part 32 so that rotation of the rotor 18 will cause longitudinal movement of the tubular part 32 along the rotational axis 19.

Connected to the tubular part 32 and the guide member 34 is a valve carrier part 33. The guide member 34 is adapted to engage with the internal surface of the central part 15 to centrally locate the tubular member 32 and guide its movement along the rotational axis 19. Also provided on the valve carrier 33 is a valve washer 35 which in the position shown closes orifice 36. The guide member 34 may be of web-like construction or at least is provided with apertures so as not to hinder fluid flow through the central part 15 of the valve.

The spring 29 biases the valve carrier 33 and hence valve washer 35 into engagement with the orifice 36 thus closing the orifice 36 from the inlet 11.

The fluid inlet 11 is in permanent fluid flow connection with the first outlet 14, fluid being able to flow through the inlet 11, through passage 37, through apertures in the guide member 34 along the central part 15 of the valve past rotor 18 to the outlet 14.

The inlet 11 is also in flow communication with the second outlet 12, flow communication being provided by inlet 11, passageway 37, passageway 38, filter 39, orifice 40 and passageway 42 through to the second outlet 12.

The filter 39 and orifice 40 may be selected so as to allow the flow between the inlet 11 and second outlet 12 at a desired flow rate. The filter 39 may be ceramic filter thus preventing any particles of dirt or other foreign matter from restricting the orifice 40.

Operation of the valve will now be described in more detail.

If there is no demand for fluid from the first outlet 14 then fluid will flow at a predetermined slow rate from the inlet 11 to the second outlet 12.

If there is demand from the first outlet 14, then fluid will flow from the inlet 11 to the outlet 14 past rotor 18 which will be caused to rotate by the action of fluid contact flowing over the rotor blades which in turn will rotate spindle 30. The threaded engagement of the rotor spindle 30 with the tubular member 32 will cause the tubular member 32, together with guide 34 and valve carrier 33, to move along the rotational axis 19 against the bias of spring 29 in a direction towards the rotor 18. The guide member 34 is as aforementioned prevented from rotation by the spring 29 and/or engaged with locations provided on the central part 15 thus preventing rotational movement of the tubular member 32 and its connected valve carrier 33.

As soon as movement of the tubular member 32 and its associated valve carrier 33 towards the

rotor 18 takes place, the valve washer 35 will be lifted from orifice 36 and fluid may then flow from the inlet 11 through orifice 36, and relief passageway 41 to the second outlet 12, thereby greatly increasing the flow between the inlet 11 and the second outlet 12.

While fluid is flowing from the inlet 11 to the first outlet 14, the valve washer 35 will be maintained in spaced relationship with the orifice 36 and so the increased flow of fluid between the inlet 11 and the second outlet 12 will be maintained.

As soon as fluid flow between the inlet 11 and the first outlet 14 ceases due to lack of demand at the outlet 14 then the rotor 18 will cease to rotate due to lack of fluid flow over the blades of the rotor 18 and the tubular member 32, together with the valve carrier 33, will be returned to the position shown in Figure 1 under the influence of spring 29. It will be appreciated that alternative biasing means may be provided to return the valve carrier 33 to the position shown in Figure 1 in which the valve washer 35 closes the orifice 36.

When the valve washer 35 closes the orifice 36 the increased flow of fluid between the inlet 11 and the second outlet 12 will immediately cease and flow between the inlet 11 and the second outlet 12 will return to the predetermined slow rate through filter 39 and orifice 40.

The valve of the present invention provides means of transferring fluid from an inlet 11 to a second outlet 12 in amounts influenced by the amounts of fluid flow between said inlet 11 and the first outlet 14.

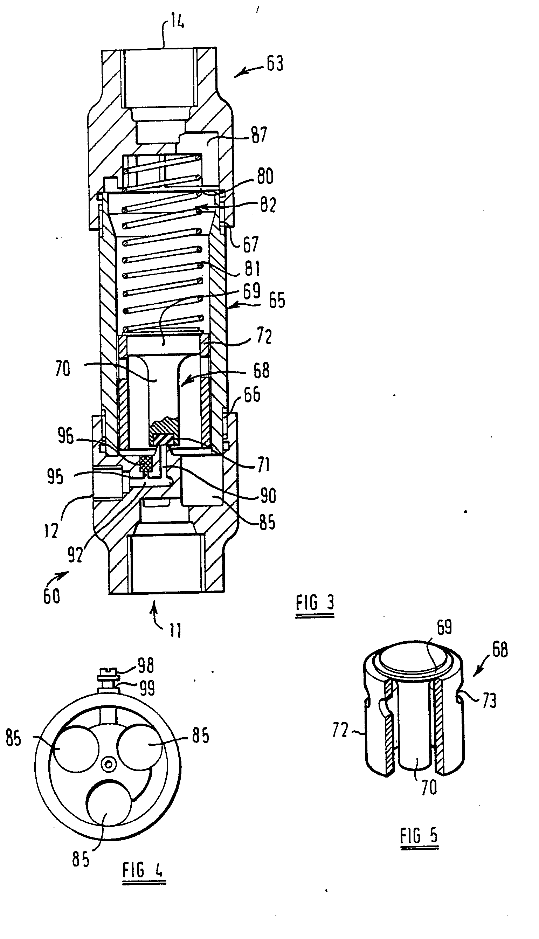

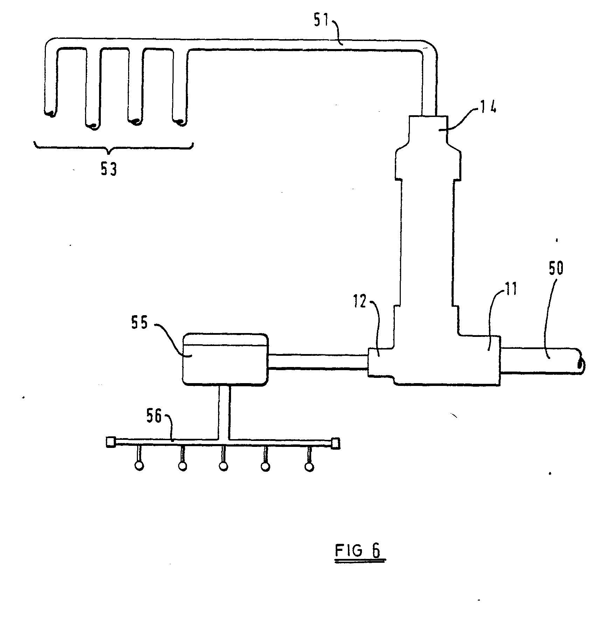

The valve shown in Figures 3, 4 and 5 comprises a lower end part 60 having an inlet 11 and a second outlet 12. An upper end part 63 is provided with a first outlet 14. Between the first end part 60 and second end part 63 is a central cylindrical-like part 65 which is secured to respective end parts 60 and 63 by co-operating thread formations 66 and 67 respectively. The threaded engagement of the central part 65 with the end parts 60 and 63 provides sealing engagement between the parts to prevent fluid loss.

The central part 65 has mounted therein a movable member generally indicated at 68 and which is also shown in detail in Figure 5. The movable member 68 comprises a central member having a head part 69, a stem part 70 which carries at its lower end a valve washer 71. The movable member further comprises a cylindrical part 72 secured to the head part 69, which cylindrical part 72 has a plurality of holes 73.

The movable member 68 is able to move from the position shown in Figure 3 into which position it is biased by helical spring 71 to a position in which the upper surface of the head 69 is in proximity to the lower surface of upper part 63.

Movement of the movable member 68 takes place when flow occcurs between inlet 11 and first outlet 14. Fluid will flow through inlet 11 into the cavity of movable member 68 through holes 73 and the small gap between movable member 68 and central part 65 to the outlet 14. The movable member 68 will be "carried" from its first state, as shown in Figure 3, by the fluid flow in the same direction as the flow to a second state against the biasing force of spring 81, in which the head 69 of the movable member 68 will be located in the region 82 of enlarbed diameter of the central part 65. Increased fluid flow from inlet 11 to outlet 14 is now possible due to the increase in cross-sectional flow path between movable member 68 and central part 65, the flow path comprising connecting channels 85, holes 73 in the movable member 68, and the gap between the sleeve-like part 72 of the movable member 68 and the inner surface of the wall of the enlarged area 82 of central part 65. Fluid then flows through connecting bores, one of which is shown at 87 in upper part 63, to the first outlet 14.

While fluid flow continues between the inlet 11 and the first outlet 14, the movable member 68 will be maintained in its uppermost position and valve washer 71 will have been moved out of engagement with the upper end of passageway 90, the lower end of which communicates with passageway 92 whic in turn communicates with second outlet 12.

When, therefore, the movable member 68 moved out of engagement with the end of passageway 90 fluid may flow from inlet 11 through connecting passageways 85, passageways 90 and 92 to second outlet 12.

The flow of fluid between inlet 11 and second outlet 12 may be adjusted by adjusting member 98 which is threadedly engaged in bore 99, the adjusting member 98 having an end region which co-operates with a seating provided in either passageway 90 or 92, the arrangement between the adjusting member 98 and the seating enabling restriction of the flow path and hence restriction in the fluid flowing between inlet 11 to second outlet 12 through passageways 90 and 92.

The adjusting member 98 therefore provides means whereby the rate of flow from the inlet 11 to the second outlet 12 during flow from inlet 11 to first outlet 14 may easily be adjusted to cope with factors such as the size of cistern, water pressure etc.

When fluid flow between inlet 11 and outlet 14 ceases, the movable member 68 will immediately return under the force of the helical spring 81 to the position shown in Figure 3 in which the valve washer 71 closes the upper end of passageway 90. Flow of fluid from inlet 11 through the passageway 90 to outlet 12 will then cease.

The gap between the inner wall of the central part 65 and the sleeve-like part 72 of the movable member 68 permits of easy return of the movable member 68 to it first state closing passageway 90 to the flow of fluid.

The gap between the inner wall of the central part 65 and the sleeve-like part 72 of movable member 68 has an additional advantage in that it allows a very small flow between the inlet 11 and first outlet 14 without effecting flow between inlet 11 and first outlet. In use of the valve to feed an automatic flushing system, such a provision has considerable benefit since it allows for a "dripping tap" for example without causing continued "fast" fill of the cistern.

A permanent flow of fluid between inlet 11 to second outlet 12 via passageway 95, in which is positioned a ceramic filter 96 is maintained. The filter 96 may by itself or in combination with an orifice of predetermined or adjustable size enable a small flow to continually exist between inlet 11 and second outlet 12.

It is possible in some applications that said permanent small flow may be eliminated, so that there is flow between inlet 11 and second outlet 12 only when there is flow between inlet 11 and first outlet 14.

It will be appreciated that the central cylindrical like part 65 may be considerably shorter since it is necessary only to permit of sufficient movement of the movable member 68 so as to move the valve washer 71 from the end of passageway 90 to allow flow of fluid therethrough.

The provision of the longer tubular member 65 shown in the drawing enables use of a long helical spring 81 which, in use, has been found to be particularly reliable.

One use of the two valves of the present invention shown in Figures 1 to 5 will now be described in an application to conserve a water supply to a water using area as shown in Figure 6.

Figure 6 shows a schematic diagram of a water supply to a water using area such as a public convenience comprising a plurality of water closets having manually operable cisterns, a plurality of hand washing basins and an automatic cistern for flushing a urinal.

A water inlet pipe 50 is connected to input 11 of the valves shown in Figures 1 to 4 the first outlet 14 of which is connected to pipe 51 which is connected to the water supply pipe to hand washing basins designated schematically at 53, and to manually operable cisterns.

The second outlet 12 is connected to an automatically operated flushing cistern 55 having a supply pipe 56, the operation of the automatic cistern 55 being to flush a urinal at periodic intervals.

If the urinal is not flushed with sufficient regularity, problems of odour and/or hygene may occur. If, on the other hand, the feed of water to the automatic flushing cistern 55 is plentifull, excessive flushing of the urinal may take place causing a waste of water.

It is desirable that the urinal is flushed most often in times of greatest use.

The times of greatest use of the urinal are likely to be accompanied by an increase in use of the hand washing basins. So if the water supply to the hand washing basins is connected to the first outlet 14 when there is a demand for water supply from the first outlet then water will flow between the inlet 11 of the valve of the present invention and the outlet 14 causing movement of the fluid flow sensor and hence the rate of flow of water to the second outlet 12 is increased. The automatic flushing cistern 55 which may work on a syphonic principle is thus filled very much more quickly causing a considerable increase in the flushing rate of the urinal.

When the hand washing basins etc. are not in use then the cistern 55 will be filled at a predetermined slow rate ensuring that the urinal is flushed automatically at albeit infrequent intervals, such a rate of flushing being sufficient if use of the urinal is infrequent.

The valves described with reference to Figures 1 to 5 are intended to facilitate the adjustment to the desired flow rate between the inlet and second outlet depending on rate of flow between the inlet and first outlet. It is envisaged that the valve may comprise a simplified device comprising a passageway between an inlet and an outlet in which passageway a pivotally movable member is mounted, its position relative to its mounting being determined by the rate of flow of fluid between said inlet and outlet. The member may be connected to other valve means and operate said other valve means to alter flow between said inlet and another outlet. The rate of flow being determined by the relative position of the movable member and hence the rate of flow between said inlet and said outlet.

Whereas one use of the valve of the present invention has been described with reference with a system for saving water, it will be appreciated that it may have many uses with different types of fluids where it is desirable to adjust the flow between an inlet and an outlet in accordance with the flow taking place from the same inlet to another outlet.

## Claims

1. A fluid flow control valve comprising an inlet (11) in permanent communication with a first outlet (14), and a movable member (32, 33, 34; 68) provided in the flow path between the inlet and the first outlet (14) and taking a first idle state where it provides a predetermined or zero flow of the fluid through a second outlet (12), said movable member being moved under influence of the fluid from said first state to a second state in which it permits of or increases flow between said inlet (11) and the second outlet (12); the movable member (32, 33, 34; 68) being designed so as to maintain, without significant restriction, the flow path between the inlet (11) and the first outlet (14), when it moves from said first state into said second state; characterised in that the valve is adapted to respond to an intermittent demand of said fluid at the first outlet (14), the said movable member comprises or co-operates with a fluid flow sensor (18; 68) in the flow path, said sensor, on demand of fluid at the first outlet (14) acting solely under the infuence of fluid flow through said permenant communication to move said movable member (32, 33, 34; 68) to said second state.

2. A fluid flow control valve as claimed in Claim 1 characterised in that a permanently open limited fluid flow path (38, 95) is provided between the inlet (11) and said second outlet (12).

3. A fluid flow control valve as claimed in Claim 2 characterised in that said movable member (32, 33, 34; 68) comprises at least a part (35, 71) of a valve means positioned in the fluid flow path (38, 95) between said inlet (11) and said second outlet (12), said valve means being opened or opened more fully in response to movement of said movable member (32, 33, 34; 68) from said first state to said second state.

4. A fluid flow control valve as claimed in Claim 2 or Claim 3 characterised in that said valve provides an increased cross-section for the flow path between said inlet (11) and said first outlet (14) when said movable member (32, 33, 34; 68) is in its second state.

5. A fluid flow control valve as claimed in Claim 2 or Claim 3 characterised in that said movable member (68) undergoes sliding movement relative to a valve body (65) during movement between said first and second states.

6. A fluid flow control valve as claimed in any one of Claims 1 to 4 characterised in that said fluid flow sensor comprises a rotatable member (18), rotation of said rotational member (18) moving said movable member (32, 33, 34) from its first state to its second state.

7. A fluid flow control valve as claimed in any one of the preceding claims characterised in that adjustment means (98, 99) are provided to adjust the rate of fluid flow between said inlet (11) and said second outlet (12) that occurs during fluid flow between said inlet (11) and said first outlet (14).

8. An automatic flushing system including a cistern (55) and being situated in a washing using area having other water using appliances (53), the automatic flushing system being arranged to operate on the accumulation of a predetermined amount of water in the cistern (55), said automatic flushing system comprising a fluid flow control valve having an inlet (11) for controlling the supply of water to the cistern (55) and the other water using appliances (53), characterised in that said valve has a first outlet (14) in permanent communication with the inlet (11) and is connected to said other water using appliances (53), which are provided to intermittently demand water from said first outlet, said control valve has fluid flow sensor means comprising a movable member (32, 33, 34; 68) positioned in the flow path between the inlet and the first outlet (14), the movable member (32, 33, 34; 68) being moved from a first idle state to a second state under influence of fluid flow as sensed by said sensor means in response to water demand from said other water using appliances (53), said second state permitting of or increasing flow between said inlet (11) and a second outlet (12) connected to said cistern (55), the arrangement being such that when said water using appliances (53) are used and water is flowing to said appliances, water flow to said cistern (55) will be increased.

9. An automatic flushing system according to Claim 8 characterised in that said valve is as claimed in any one of Claims 1 to 7.

**Patentansprüche**

1. Strömungsregelventil mit einem Einlaß (11), der ständig eine Verbindung mit einem ersten Auslaß (14) aufrechterhält, und einem beweglichen Bauteil (32, 33, 34; 68), das in Strömungsweg zwischen dem Einlaß und dem ersten Auslaß (14) angeordnet ist und einen ersten untätigen Zustand einnimmt, wobei es eine vorbestimmte Strömungsmenge oder eine Nullströmungsmenge durch einen zweiten Auslaß (12) durchläßt, und das bewegliche Bauteil unter dem Einfluß des strömenden Fluids aus dem ersten Zustand in einen zweiten Zustand überführt wird, bei welchem es eine Strömung oder ein Anwachsen der Strömung zwischen dem zweiten Einlaß (11) und dem zweiten Auslaß (12) zuläßt, wobei das bewegliche Bauteil (32, 33, 34; 68) so gestaltet ist, daß es den Strömungsweg zwischen dem einlaß (11) und dem ersten Auslaß (14) bei seiner Bewegung vom ersten Zustand in den zweiten Zustand ohne merkliche Beschränkung aufrechterhält, dadurch gekennzeichnet, daß das Ventil so ausgebildet ist, daß es auf einen intermittierenden Bedarf von Fluid am ersten Auslaß (14) reagiert, daß das bewegliche Bauteil einen Strömungssensor (18; 68) in dem Strömungsweg umfaßt oder damit zusammenwirkt, wobei dieser Sensor auf Bedarf an Fluid am ersten Auslaß (14) ausschließlich unter dem Einfluß des durch die ständig aufrechterhaltene Verbindung strömenden Fluids das bewegliche Bauteil (32, 33, 34; 68) dazu veranlaßt, den zweiten Zustand einzunehmen.

2. Strömungsregelventil nach Anspruch 1, dadurch gekennzeichnet, daß zwischen dem Einlaß (11) und dem zweiten Auslaß (12) ein begrenzter, ständig aufrechterhaltener Strömungspfad (38, 95) besteht.

3. Strömungsregelventil nach Anspruch 2, dadurch gekennzeichnet, daß das bewegliche Bauteil (32, 33, 34; 68) mindestens Teil (35, 71) einer Ventilvorrichtung bildet, die in dem Strömungspfad (38, 95) zwischen dem Einlaß (11) und dem zweiten Auslaß (12) angeordnet ist, wobei die Ventilvorrichtung als Reaktion auf den Übergang des beweglichen Bauteils (32, 33, 34; 68) aus dem ersten Zustand in den zweiten Zustand geöffnet oder weiter geöffnet wird.

4. Strömungsregelventil nach Anspruch 2 oder 3, dadurch gekennzeichnet, daß das Ventil einen vergrößerten Querschnitt für den Strömungsweg zwischen dem Einlaß (11) und dem zweiten Auslaß (14) bereitstellt, wenn das bewegliche Bauteil (32, 33, 34; 68) in seinem zweiten Zustand ist.

5. Strömungsregelventil nach Anspruch 2 oder 3, dadurch gekennzeichnet, daß das bewegliche Bauteil (68) relative zu einem Ventilkörper (65) bei Übergang vom ersten in den zweiten Zustand eine Gleitbewegung ausführt.

6. Strömungsregelventil nach einem der Ansprüche 1 bis 4, dadurch gekennzeichnet, daß der Strömungssensor ein drehbares Teil (18) aufweist, dessen Drehung das bewegliche Bauteil (32, 33, 34) aus seinem ersten Zustand in seinen zweiten Zustand bringt.

7. Strömungsregelventil nach einem der vorangehenden Ansprüche, dadurch gekennzeichnet, daß Einstellmittel (98, 99) zum einstellen der Strömungsgeschwindigkeit zwischen dem Einlaß (11) und dem zweiten Auslaß (12) vorgesehen sind, die während der Strömung zwischen dem Einlaß (11) und dem ersten Einlaß (14) auftritt.

8. Automatisches Spülsystem, das einen Spülkasten (55) aufweist und in einem Wasserverbrauchsgebiet zusammen mit anderen Wasserverbrauchern (53) angeordnet ist, wobei das automatische Spülsystem so ausgebildet ist, daß es auf die Ansammlung einer vorbestimmten Wassermenge im Spülkasten (55) tätig wird, und ein Strömungsregelventil mit einem Einlaß (11) zum Regeln der Wasserspeisung zum Spülkasten (55) und zu den anderen Wasserverbrauchern (53) aufweist, dadurch gekennzeichnet, daß das Ventil einen ersten Auslaß (14) aufweist, der in ständiger Verbindung mit dem Einlaß (11) steht und an die anderen Wasserverbraucher (53) angeschlossen ist, welche zu intermittierenden Entnahme von Wasser aus dem ersten Auslaß ausgestaltet sind, wobei das Regelventil einen Strömungssensor mit einem beweglichen Bauteil (32, 33, 34; 68) im Strömungsweg zwischen dem Einlaß und dem ersten Auslaß (14) aufweist, das bewegliche Bauteil (32, 33, 34; 68) aus einem ersten untätigen Zustand in einen zweiten Zustand unter Einfluß der von dem Strömungssensor gemessenen Strömungsmenge in Reaktion auf die Wasserentnahme der anderen Wasserverbraucher (53) bewegt wird, der zweite Zustand eine Strömung zwischen dem Einlaß (11) und einem zweiten, mit dem Spülkasten (55) verbundenen Auslaß (12) zuläßt und die Anordnung so getroffen ist, daß dann, wenn die anderen Wasserverbraucher (53) im Betrieb sind und Wasser dorthin strömt, die Wasserströmung zum Spülkasten (55) verstärkt wird.

9. Automatisches Spülsystem nach Anspruch 8, dadurch gekennzeichnet, daß das Ventil so wie in einem der Ansprüche 1 bis 7 angegeben ausgebildet ist.

## Revendications

1. Valve de réglage d'un écoulement de fluide, comportant une entrée (11) qui est en communication permanente avec une première sortie (14), et un élément mobile (32, 33, 34; 68), disposé sur le trajet d'écoulement entre l'entrée et la première sortie (14) et qui se met dans un premier état au repos dans lequel il produit un écoulement prédéterminé ou nul dudit fluide à travers une seconde sortie (12), cet élément mobile état déplacé, sous l'effet du fluide, dudit premier étant dans un second état dans lequel il autorise ou augmente l'écoulement du fluide entre l'entrée (11) et la seconde sortie (12), l'élément mobile (32, 33, 34; 68) étant construit de façon à maintenir, sans restriction significative, le trajet d'écoulement entre l'entrée (11) et la première sortie (14) quand il se déplace du premier état dans le second état, caractérisée en ce que la valve est adaptée à répondre à un appel intermittent de fluide à la première sortie (14), en ce que l'élément mobile comprend un détecteur d'écoulement de fluide (18; 68) disposé sur le trajet du fluide, ou coopère avec un tel détecteur, lequel, lors d'un appel de fluide à la première sortie, agit uniquement sous l'effet de l'écoulement du fluide dans ladite communication permanente pour déplacer l'élément mobile (32, 33, 34; 68) et l'amener dans le second état.

2. Valve de réglage d'un écoulement de fluide conforme à la revendication 1, caractérisée en ce qu'il est prevu pour l'écoulement du fluide entre l'entrée (11) et la sortie (12) un trajet limité ouvert en permanence (38, 95).

3. Valve de réglage d'un écoulement de fluide conforme à la revendication 2, caractérisée en ce que l'élément mobile (32, 33, 34; 68) comprend au moins une partie (35; 71) de moyens faisant office de soupape placés sur le trajet (38, 95) d'écoulement du fluide entre l'entrée (11) et la seconde sortie (12), ces moyens faisant office de soupape étant ouverts ou ouvertes plus complétement en réponse à un déplacement de l'élément mobile (32, 33, 34; 68) du premier état dans le second état.

4. Valve de réglage d'un écoulement de fluide conforme à l'une des revendications 2 ou 3, caractérisé en ce que la soupape donne au trajet d'écoulement entre l'entrée (11) et la première sortie (14) une section de passage agrandie lorsque l'élément mobile (32, 33, 34; 68) est dans son second état.

5. Valve de réglage d'un écoulement de fluide conforme à l'une des revendications 2 ou 3, caractérisée en ce qu'au cours de son déplacement entre les premier et second états l'élément mobile (68) effectue un mouvement de glissement par rapport à un corps (65) de la valve.

6. Valve de réglage d'un écoulement de fluide conforme à l'une quelconque des revendications 1 à 4, caractérisée en ce que le détecteur d'écoulement de fluide comprend un élément rotatif (18) dont la rotation provoque le déplacement de l'élément mobile (32, 33, 34) du premier état dans le second état.

7. Valve de réglage d'un écoulement de fluide conforme à l'une quelconque des revendications précédentes, caractérisée en ce qu'il est prévu des moyens de réglage pour régler le débit du fluide qui s'écoule entre l'entrée (11) et la seconde sortie (12) pendant l'écoulement du fluide entre l'entrée (11) et la première sortie (14).

8. Système de chasse d'eau automatique, comprenant un réservoir (55) et placé dans une zone de consommation d'eau comportant d'autres appareils consommateurs d'eau (53), ce système étant destiné à fonctionner par accumulation d'une quantité prédéterminée d'eau dans le réservoir (55) et comprenant une valve de réglage d'un écoulement de fluide comportant une entrée (11) pour régler l'alimentation en eau du réservoir (55) et des autres appareils consommateurs d'eau (53), caractérisé en ce que la valve comporte une première sortie (14) qui est en communication permanente avec l'entrée (11) et reliée aux autres appareils consommateurs d'eau (53) qui sont prévus pour appeler de façon intermittente de l'eau venant de la première sortie, en ce que la valve comporte des moyens de détection d'un écoulement du fluide qui comprennant un élément mobile (32, 33, 34; 68) placé sur le trajet d'écoulement entre l'entrée et la première sortie (14), l'élément mobile (32, 33, 34; 68) étant déplacé d'un premier état au repos dans un second état sous l'effet d'un écoulement du fluide tel que détecté par les moyens de détection en réponse à un appel d'eau par les autres appareils consommateurs d'eau (53), ce second état autorisant ou augmentant l'écoulement du fluide entre l'entrée (11) et une seconde sortie (12) reliée au réservoir (55), l'agencement étant tel que, quand on utilise les appareils consommateurs d'eau (53) et que de l'eau coule vers ces appareils, l'écoulement d'eau vers le réservoir (55) soit augmenté.

9. Système de chasse d'eau automatique conforme à la revendication 8, caractérisé en ce que la valve est conforme à l'une quelconque des revendications 1 à 7.

FIG 1

FIG 2

FIG 3

FIG 4

FIG 5

FIG 6